# EUROPEAN PATENT SPECIFICATION

(11) **EP 0 465 169 B1**
(45) Date of publication and mention of the grant of the patent: **29.11.1995**
(21) Application number: 91305902.8
(22) Date of filing: 28.06.1991
(51) Int. Cl.: B29C 70/00, B29D 31/00

(54) **Method for manufacturing fan blades**
Verfahren zur Herstellung von Gebläseschaufeln
Procédé pour la fabrication des aubes d'un ventilateur

(30) Priority: 02.07.1990 US 546806
(43) Date of publication of application: 08.01.1992
(73) Proprietor: HUDSON PRODUCTS CORPORATION, Houston, Texas 77036 (US)
(72) Inventor: Monroe, Robert C., Houston, Texas 77035 (US)
(74) Representative: Purvis, William Michael Cameron

(56) References cited:
- EP-A- 0 292 086
- EP-A- 0 295 758
- DE-A- 2 300 275
- FR-A- 1 145 327
- FR-A- 1 303 210
- GB-A- 2 225 277
- US-A- 4 808 362

## Description

The invention pertains to a method of manufacturing fan blades.

The art of manufacturing fan blades is quite varied. The method used depends on whether the finished fan blade is to be hollow or solid, and whether it is to be one piece or of multiple pieces secured together. The method used also depends on the desired air foil shape with simple shapes being suitable for pressing while more complex shapes require moulding or laying-up techniques. This invention pertains to the construction of hollow, one-piece, fibreglass fan blades of a rather complex configuration such that resin transfer or injection moulding is the method of choice. No internal spars or fillers are necessary to provide additional bending strength during operation. This hollow, light construction also produces a blade that is safer to operate as compared to blades with moulded-in spars.

In the past, such hollow fan blades were made in two pieces, the first comprising the air foil shape and the second comprising the blade holder that attached the air foil to a rotating shaft or hub. In some cases, for example Patent Specification US-A-4 345 877, the air foil and the blade holder were made of different material. In other cases, for example Patent Specification US-A-4 720 244, the pieces were made of fibreglass that were then bonded or riveted together.

In the latter, all fibreglass, case, the blade is formed by wrapping multiple fibreglass cloth layers around a flexible bag within a mould, inflating the bag, and then forcing resin into the mould so as to impregnate the fibreglass cloths. Afterwards, the fan blade is cured and the flexible bag is removed. In an attempt more evenly to distribute the resin (so as to avoid resin build-up or resin-rich areas which are likely to crack) and to avoid wrinkles in the fibreglass, "spreaders" or rigid forms were installed inside the flexible bag and expanded therein further to support the fibreglass cloths. This spreader was used inside both the fibreglass blade holder or attachment end as well as inside the air foil end during moulding. The insertion and later removal of the spreaders before assembly of the blade and holder is labour intensive and limits the minimum size and shape of the neck portion of the fan blade. The spreader greatly increased the quality of the product but necessitated making a blade in two pieces since they had to be removed from the interior of the parts.

The typical method of making hollow, one-piece fan blades involves using crude cardboard shapes inside the pressurized flexible bags. This, of course, results in a fan blade of non-uniform wall thickness. Additionally, the cardboard shapes produce a fan blade that is full of wrinkles in the fibreglass layers and cracked resin-rich areas because of the shifting of the fibreglass cloth within the mould as resin is injected through the neck region. In most normal cases, the cardboard is unable precisely to hold and locate the fibreglass layers before resin injection.

Patent Specification US-A-4 808 362 discloses a method of forming a hollow reinforced fibreglass structure wherein a package of overlapping pieces of fibre sheet are placed in a mould with an inflatable bag within the package, the bag is inflated after the mould is closed and resin is introduced to impregnate the pieces of fibre sheet before it is cured.

According to one aspect of the invention there is provided a method of manufacturing a hollow fan blade comprising:
laying fibreglass cloths on a lower portion of a hollow mould; and
placing a flexible inflatable bag on the fibreglass cloths within the mould;
characterised by placing a semi-rigid fibreglass preform having an upper face conforming to the shape of the inside of the upper part of the blade on top of the flexible bag, the preform being made of fibreglass temporarily held together by a suitable resin binder that is compatible with resin of which the blade is to be formed;
covering the preform with fibreglass cloths;
closing the mould and inflating the flexible bag;
injecting resin into the mould around the flexible bag to impregnate both the fibreglass cloths and the preform and to replace the resin binder in the preform, thereby bonding the cloths and the preform together into an integral unit during moulding; and
curing the resin, deflating the flexible bag, and removing the fan blade from the mould.

Such a method of manufacturing a hollow one-piece fan blade can be less labour intensive, and can produce a blade which is stronger, more aesthetically pleasing to the eye and results in fewer rejects than the methods previously used to construct such fan blades. It can specifically reduce the occurrence of resin-rich areas while also providing support and precise placement and retention of the fibreglass cloths so as to reduce their wrinkling or shifting when the resin is forced into the mould.

According to another aspect of the invention there is provided a moulded hollow fan blade constructed of upper and lower layers of resin-impregnated fibreglass cloths and having an internal cavity therein;
characterised by a single, cured fibreglass preform within the fan blade and defining a portion of the internal cavity therein, the preform, which was initially constructed of fibreglass held together by a suitable resin binder that is compatible with resin injected during a subsequent moulding operation, having provided support for upper layers of the cloths during a moulding operation and having bonded to the cloths during the moulding operation so as to become an integral part of the fan blade.

The invention is diagrammatically illustrated by way of example in the accompanying drawings, in which:
Figure 1 is a pictorial view partially broken away of a finished fan blade formed by a method according to the invention;
Figure 2 is a pictorial view of a fibreglass preform used in a method according to the invention;
Figure 3 is a sectional view taken on line 3-3 of Figure 2;
Figure 4 is a sectional view taken on line 4-4 of Figure 2;
Figure 5 is a sectional view taken on line 5-5 of Figure 2;
Figure 6 is a pictorial view of a lay-up operation in a method according to the invention;
Figure 7 is a pictorial view of a mould enclosing a preform and a flexible bag in a method according to the invention; and
Figure 8 is a pictorial view of a mould during a curing operation in a method according to the invention.

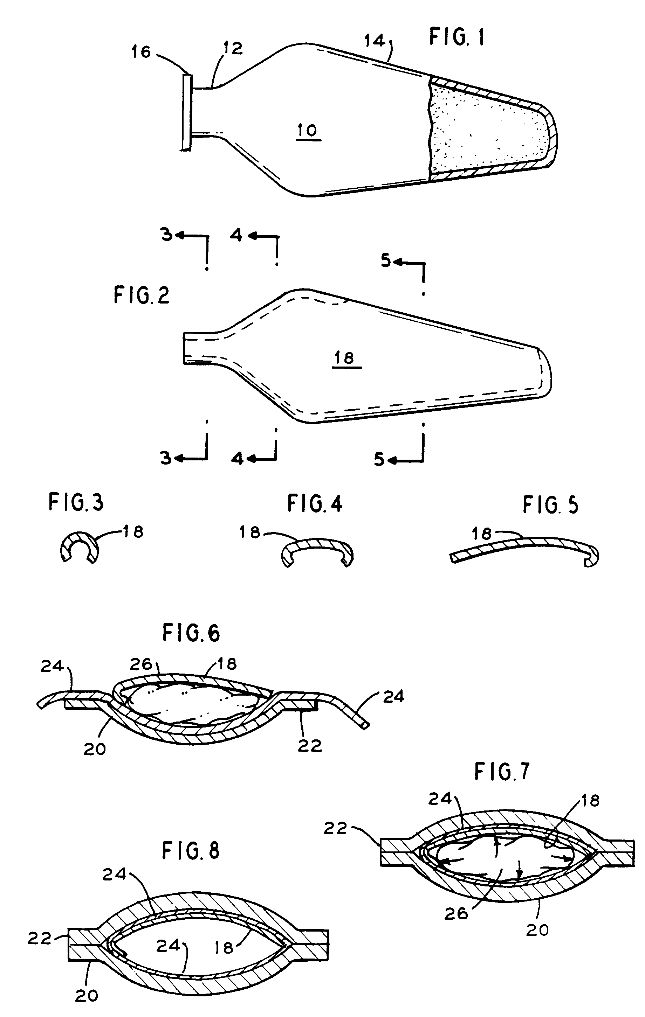

Referring initially to Figure 1, a hollow fan blade 10 has a neck portion 12 and an air foil portion 14. The neck portion 12 is configured with a collar 16 for connection to a rotating shaft or hub (not shown). The air foil portion 14 is configured as needed for the operating conditions, but in any event, its hollow construction is of multi-layered fibreglass. No metallic internal spar is needed to supply adequate strength for safe operation.

A preform 18, as shown in Figure 2, is used in the construction of the fan blade 10 and is designed eventually to become a part of the fan blade 10. The curvature of the preform 18 can vary as needed with typical curvatures illustrated in Figures 3, 4, and 5. As can be surmised, the preform 18 is designed only to support upper layers of fibreglass cloths in a mould until they are saturated with resin and cured. Lower layers of fibreglass cloths will be supported by the bottom half of the mould. Consequently, the entire shape of the fan blade 10 need not be supported by the preform 18, only the upper half of it.

The preform 18 is preferably constructed of chopped fibreglass fibres which have been shaped as needed by being blown or by laying a fibreglass mat onto a mandrel of the desired curvature. After the required thickness has been achieved, the chopped fibreglass or mat is held together by impregnating it with a light resin binder with this mixture then being oven cured to create the desired semi-rigid preform 18. The light binder resin used to hold the preform 18 together is compatible with the resin used during the moulding of the fan blade 10. After the preform 18 is cured, it is stripped off its mandrel and used to support the upper layers of the fibreglass cloths in a mould for constructing the fan blade 10. Thus, the preform 18 is constructed to conform to the finished blade shape for precise fibreglass placement.

Referring now to Figures 6 to 8, the steps required to mould the fan blade 10 are shown. Initially, a bottom half 20 of a mould 22 is laid with varying layers of fibreglass cloths 24 or other fibreglass types. On top of this, a flexible bag 26 is placed which will be pressurized once the mould 22 is closed. While the flexible bag 26 is still deflated, however, the preform 18 is positioned on top of it so as to support upper layers of the fibreglass cloths 24 which will be folded around it and/or placed on top of it. Because the preform 18 is able to maintain and precisely position the dry laid-up fibreglass cloths 24 within the mould 22, the possibility of wrinkles and/or resin-rich areas within the mould 22 is greatly reduced, if not completely eliminated.

After the mould 22 is closed and clamped, the flexible bag 26 is inflated through the neck portion 12 and subsequently sealed thereby also restraining the dry fibreglass cloths 24 in place within the mould 22. Upon proper inflation, resin is pumped or injected into the mould 22 via the neck portion 12 to saturate both the preform 18 and the fibreglass cloth layers 24 thereby binding the two together. Heat is then applied to cure this mixture after which the flexible bag 26 is removed after the mould 22 is opened to release the newly formed fan blade 10.

The use of the preform 18 enables the fibreglass cloths 24 to be maintained at their optimum position upon closing of the mould 22. Additionally, the preform 18 can be formed into any planform shape, straight or tapered, and can easily accommodate a tapered attachment end (the neck portion 12) that normally terminates into a cylindrical clamping area for suitable mounting. With the disclosed rein transfer method or resin injection method of moulding, a more aerodynamically efficient, stronger and aesthetically pleasing one-piece fan blade can be manufactured.

## Claims

1. A method of manufacturing a hollow fan blade (10) comprising:
laying fibreglass cloths (24) on a lower portion of a hollow mould (22); and
placing a flexible inflatable bag (26) on the fibreglass cloths (24) within the mould (22);
characterised by placing a semi-rigid fibreglass preform (18) having an upper face conforming to the shape of the inside of the upper part of the blade on top of the flexible bag (26), the preform (18) being made of fibreglass temporarily held together by a suitable resin binder that is compatible with resin of which the blade is to be formed;
covering the preform (18) with fibreglass cloths (24);
closing the mould (22) and inflating the flexible bag (26);
injecting resin into the mould (22) around the flexible bag (26) to impregnate both the fibreglass cloths (24) and the preform (18) and to replace the resin binder in the preform (18), thereby bonding the cloths (24) and the preform (18) together into an integral unit during moulding; and
curing the resin, deflating the flexible bag (26), and removing the fan blade (10) from the mould (22).

2. A method according to claim 1, wherein the preform (18) is constructed of chopped fibreglass.

3. A method according to claim 1, wherein the preform (18) is constructed of a fibreglass mat.

4. A method according to any one of claims 1 to 3, wherein the fan blade (10) is of hollow one-piece construction comprising both a neck portion (12) and an air foil portion (14).

5. A moulded hollow fan blade (10) constructed of upper and lower layers of resin-impregnated fibreglass cloths (24) and having an internal cavity therein;
characterised by a single, cured fibreglass preform (18) within the fan blade (10) and defining a portion of the internal cavity therein, the preform (18), which was initially constructed of fibreglass held together by a suitable resin binder that is compatible with resin injected during a subsequent moulding operation, having provided support for upper layers of the cloths (24) during a moulding operation and having bonded to the cloths (24) during the moulding operation so as to become an integral part of the fan blade (10).

6. A moulded hollow fan blade according to claim 5, wherein the preform (18) is constructed of chopped fibreglass.

7. A moulded hollow fan blade according to claim 5, wherein the preform (18) is constructed of a fibreglass mat.

8. A moulded hollow fan blade according to claim 5, wherein the fan blade (10) is of hollow one-piece construction comprising both a neck portion (12) and an air foil portion (14).

## Patentansprüche

1. Verfahren zur Herstellung einer hohen Gebläseschaufel (10) unter Ablegen von Glasfasertüchern (24) auf einem unteren Teil einer hohlen Form (22) und Anordnung eines flexiblen aufblasbaren Sackes (26) auf den Glasfasertüchern (24) in der Form (22), **dadurch gekennzeichnet**, daß man
einen halbstarren Glasfaservorformling (18) mit einer mit der Form der Innenseite des oberen Teils der Schaufel übereinstimmenden Oberseite oben auf den flexiblen Sack (26) auflegt, wobei der Vorformling (18) aus Glasfaser besteht, die temperorär durch ein geeignetes Harzbindemittel zusammengehalten wird, welches mit Harz, aus welchem die Schaufel gebildet werden soll, verträglich ist,
den Vorformling 18 mit Glasfasertüchern (24) bedeckt,
die Form (22) verschließt und den flexiblen Sack (26) aufbläst,
Harz in die Form (22) um den flexiblen Sack (26) herum einspritzt, um sowohl die Glasfasertücher (24) als auch den Vorformling (18) zu tränken und das Harzbindemittel in dem Vorformling (18) zu ersetzen, und dabei die Tücher (24) und den Vorformling (18) während des Formens zu einer integralen Einheit miteinander verbindet und das Harz härtet, den flexiblen Sack (26) entleert und die Gebläseschaufel (10) aus der Form (22) entfernt.

2. Verfahren nach Anspruch 1, bei dem man den Vorformling (18) aus Schnittglasfasern herstellt.

3. Verfahren nach Anspruch 1, bei dem man den Vorformling (18) aus Glasfasermatte herstellt.

4. Verfahren nach einem der Ansprüche 1 bis 3, bei dem die Gebläseschaufel (10) eine hohle einstückige Konstruktion ist, die sowohl einen Halsabschnitt (12) als auch einen Tragflächenabschnitt (14) umfaßt.

5. Geformte hohle Gebläseschaufel (10) aus oberen und unteren Schichten von mit Harz getränkten Glasfasertüchern (24) und mit einem inneren Hohlraum darin, **gekennzeichnet durch** einen einzelnen gehärteten Glasfaservorformling (18) in der Gebläseschaufel (10), der einen Teil des inneren Hohlraumes darin begrenzt und der anfangs aus Glasfaser konstruiert wurde, die durch eine geeignetes Harzbindemittel zusammengehalten wird, welches mit während eines anschließenden Formens eingespritztem Harz verträglich ist, wobei der Vorformling für ober Schichten der Tücher (24) während eines Formens eine Unterstützung lieferte und an die Tücher (24) während des Formens so gebunden wurde, daß er ein integraler Teil der Gebläseschaufel (10) wurde.

6. Geformte hohle Gebläseschaufel nach Anspruch 5, bei der der Vorformling (18) aus Schnittglasfasern hergestellt ist.

7. Geformte hohle Gebläseschaufel nach Anspruch 5, bei der der Vorformling (18) aus einer Glasfasermatte hergestellt ist.

8. Geformte hohle Gebläseschaufel nach Anspruch 5, bei der die Gebläseschaufel (10) eine hohle einstückige Konstruktion ist, die sowohl einen Halsabschnitt (12) als auch einen Tragflächenabschnitt (14) umfaßt.

## Revendications

1. Procédé de fabrication d'une pale de ventilateur creuse (10) comprenant les opérations consistant à :
coucher des tissus de fibres de verre (24) sur une portion inférieure d'un moule creux (22); et
placer une poche gonflable souple (26) sur les tissus de fibres de verre (24) au sein du moule (22);
caractérisé en ce qu'est placée une préforme de fibres de verre semi-rigide (18), comportant une face supérieure épousant la forme de l'intérieur de la partie supérieure de la pale, sur le dessus de la poche souple (26), la préforme (18) étant faite de fibre de verre provisoirement fixée par un liant de résine approprié qui est compatible avec la résine dont la pale doit être faite;
recouvrir la préforme (18) de tissus de fibres de verre (24);
fermer le moule (22) et gonfler la poche souple (26);
injecter de la résine dans le moule (22) autour de la poche souple (26) pour imprégner à la fois les tissus de fibres de verre (24) et la préforme (18) et remplacer le liant de résine dans la préforme (18), ce qui lie les tissus (24) et la préforme (18) en une unité d'un seul tenant durant le moulage; et
cuire la résine, dégonfler la poche souple (26), et extraire la pale de ventilateur (10) du moule (22).

2. Procédé selon la revendication 1, dans lequel la préforme (18) est faite de fibre de verre hachée.

3. Procédé selon la revendication 1, dans lequel la préforme (18) est faite d'un mat de fibre de verre.

4. Procédé selon l'une quelconque des revendications 1 à 3, dans lequel la pale de ventilateur (10) est d'une construction d'une seule pièce creuse comprenant à la fois une portion rétrécie (12) et une portion d'aile (14).

5. Pale de ventilateur creuse moulée (10) faite de couches supérieures et inférieures de tissus de fibres de verre (24) imprégnés de résine et comportant une cavité interne en son sein;
caractérisée par une seule préforme (18) de fibre de verre cuite au sein de la pale de ventilateur (10) et formant une portion de la cavité interne en son sein, la préforme (18), initialement faite de fibre de verre provisoirement fixée par un liant de résine approprié étant compatible avec la résine injectée durant une opération de moulage ultérieure, ayant servi de support aux couches supérieures de tissus (24) durant une opération de moulage et s'étant liée aux tissus (24) durant l'opération de moulage afin de faire partie intégrante de la pale de ventilateur (10).

6. Pale de ventilateur creuse moulée selon la revendication 5, dans laquelle la préforme (18) est faite de fibre de verre hachée.

7. Pale de ventilateur creuse moulée selon la revendication 5, dans laquelle la préforme (18) est faite d'un mat de fibre de verre.

8. Pale de ventilateur creuse moulée selon la revendication 5, dans laquelle la pale de ventilateur (10) est d'une construction d'une seule pièce creuse comprenant à la fois une portion rétrécie (12) et une portion d'aile (14).
